# EUROPEAN PATENT SPECIFICATION

(11) **EP 1 980 826 B1**
(45) Date of publication and mention of the grant of the patent: **26.08.2009**
(21) Application number: 08006802.6
(22) Date of filing: 03.04.2008
(51) Int. Cl.: G01F 1/06, G01F 15/18, A47J 31/44, A47J 31/46

(54) **Flow meter**
Durchflussmessgerät
Débitmètre

(30) Priority: 11.04.2007 IT MI20070129 U
(43) Date of publication of application: 15.10.2008
(73) Proprietor: GICAR S.r.l., 23807 MERATE (Lecco) (IT)
(72) Inventor: Arlati, Giuseppe, 23875 Osnago (Lecco) (IT)
(74) Representative: Carloni, Franco

(56) References cited:
- EP-A- 0 841 547
- DE-A1- 3 442 358
- FR-A- 2 544 187

## Description

The present invention generally relates to the technical field of devices for measuring a volumetric flow and, in particular, to a flow meter for an automatic beverage preparing and dispensing apparatus, having an improved structure for easy and versatile mounting and for accurate and repeatable metering.

A device of the kind mentioned above is known in the art from, for example, published European patent application EP-A-0 841 547. The flow meter disclosed in this document comprises a measuring casing formed of a lower part and an upper part, with an inlet connection and an outlet connection, respectively, and includes a measuring body rotatably supported in the casing for determining the liquid flow.

The teaching in document EP-A-0 841 547 is that the upper part and the lower part of the measuring casing are detachably interconnectable by a bayonet catch, so that the outlet connection can be placed in four mutually symmetrically displaced positions on the measuring casing. In this way, the outlet connection can be oriented in different directions opposite to the inlet of a suction pump of the apparatus for the preparation of beverages, thus contributing to a space-saving arrangement of the apparatus.

In the practice of this teaching there is, however, the disadvantage that if the outlet connection of the flow meter is originally not placed in a position suitable for connection to the inlet of the suction pump, the user is required to disassemble the flow meter and reassemble it with the outlet connection oriented in the desired direction. Further, after reassembling the flow meter, it is recommended that the user test the same for leak-proofness before installing it in an apparatus for the preparation of beverages. These operations require a certain amount of time and some degree of skill on the part of the user to correctly assemble the flow meter, without altering the operating characteristics thereof, and not least to use sophisticated testing equipment.

Of course, the flow meter can be fabricated, assembled and tested in batches at the manufacturing site, with the outlet connection oriented in a predetermined direction, as required by a production plan based on customer order and sales forecast, and then shipped to the customer in a condition ready to be installed. When the parts of the flow meter, however, are assembled by hand, f.i. because automated manufacturing means are either unavailable or impractical to implement, one must take into account that human error can come into play during the assembly operation and cause the flow meter to be assembled with the outlet connection oriented in a wrong direction within a same production batch.

It is, therefore, the object of the present invention to provide an improved flow meter that maintains the advantageous features of the prior art teaching, possibly without suffering form the drawbacks noted hereinabove.

More particularly, this object is achieved according to the present invention by a flow meter for measuring a liquid flow for an automatic beverage preparing and dispensing apparatus, with a measuring casing comprising an upper part and a lower part, and provided with an inlet connection and an outlet connection, as well as a measuring body rotatably supported in the casing for determining the liquid flow, the outlet connection being provided on the upper part and the inlet connection being provided on the lower part of the measuring casing, and the upper part and the lower part being detachably interconnectable by a bayonet catch formed of a number of radially outwardly projecting hooks positioned on the periphery of the lower part and a corresponding number of locking receptacles positioned on the upper part of the measuring casing, characterised in that the flow meter is provided with a radially outwardly projecting tooth positioned on the periphery of the lower part and with a corresponding slot formed on the upper part for engagement with the tooth, whereby the upper part is connectable to the lower part in only one position and orientation of the slot relative to the tooth.

With the provision of the characterising feature of the present invention, a remarkable advantage in comparison with the prior art is that the flow meter is susceptible of being assembled with the outlet connection oriented in only one predetermined direction which is dependent upon the position of the slot relative to the tooth. In this way, the possibility of errors in the manual assembly operation of the flow meter is virtually eliminated.

The present invention will now be described more in detail with reference to the following drawings, wherein:
Figures 1-3 are top view, a front elevation view and a side elevation view, respectively, of a flow meter according to the present invention,
Figure 4 is a bottom view of the upper part of the flow meter of Figures 1-3,
Figure 5 is a top view of the lower part of the flow meter of Figures 1-3,
Figures 6-8 are a top view, a front elevation view and a side elevation view , respectively, of a first variant of the flow meter according to the present invention,
Figure 9 is a bottom view of the upper part of the variant of the flow meter shown in Figures 6-8,
Figure 10 is a top view of the lower part of the variant of the flow meter shown in Figures 6-8,
Figures 11-13 are a top view, a front elevation view and a side elevation view, respectively, of a second variant of the flow meter according to the present invention,
Figure 14 is a bottom view of the upper part of the variant of the flow meter shown in Figures 11-13,
Figure 15 is a top view of the lower part of the variant of the flow meter shown in Figures 11-13,
Figures 16-18 are a top view, a front elevation view and a side elevation view, respectively, of a third variant of the flow meter according to the present invention,
Figure 19 is a bottom view of the upper part of the variant of the flow meter shown in Figures 16-18, and
Figure 20 is a top view of the lower part of the variant of the flow meter shown in Figures 16-18.

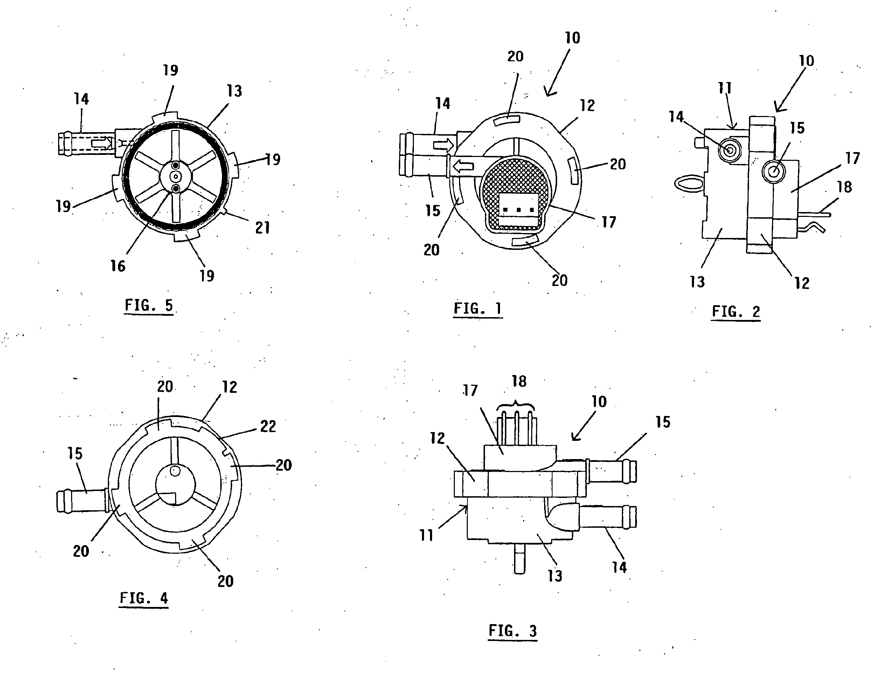

Referring initially to Figures 1-5 of the drawings, there is illustrated a flow meter according to the present invention, generally designated by 10, which comprises, in a manner known per se, a measuring casing 11 formed by an upper part 12 and a lower part 13 and having an inlet connection 14 and an outlet connection 15. A vane type measuring body 16 is rotatably supported within the measuring casing 11 for determining the liquid flow. Conveniently, arrows are embossed on the inlet connection 14 and on the outlet connection 15 for indicating the direction of liquid flow. The upper part 12 includes a head portion 17 containing a Hall sensor and measuring circuit and having electrical connector pins 18 for connection of the flow meter to a control unit. The operation of the flow meter is well known in the art and, therefore, no detailed description of its operation is believed to be necessary herein.

As known in the art, the upper part 12 and the lower part 13 of the measuring casing 11 are detachably interconnectable by a bayonet catch which is formed by a predetermined number of outwardly projecting hooks 19 symmetrically positioned on the periphery of the lower part 13 and a corresponding number of locking receptacles 20 positioned on the upper part 12 for closing the measuring casing 11.

In respect to the prior art, the flow meter 10 according to the present invention is provided with a radially projecting tooth 21 positioned on the lower part 13, located substantially intermediate two consecutive hooks 19, and with a corresponding slot 22 formed on the upper part 12 for engagement with the tooth 21.

With this arrangement, the upper part 12 is connectable to the lower part 13 in only one position and orientation of the slot 22 relative to the tooth 21. Accordingly, when the flow meter is assembled by connecting the upper part 12 to the lower part 13, the outlet connection 15 will be oriented in only one predetermined direction which is dependent upon the position of the slot 22 relative to the tooth 21.

Further, by keeping unchanged the position of the tooth 21 and by forming the slot 22 so that it is located in different positions angularly symmetrically displaced relatively to each other, the upper part 12 and the lower part 13 of the flow meter 10 can be fitted together so that the outlet connection 15 is placed in different angularly symmetrically displaced positions relative to the inlet connection 14. In this way, the favourable advantages of the prior art flow meter are maintained.

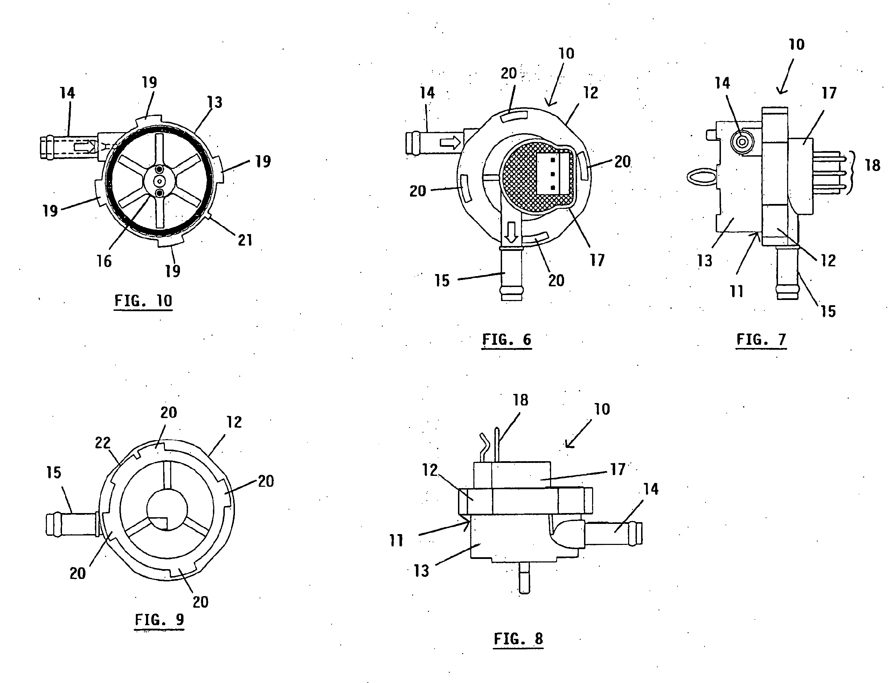

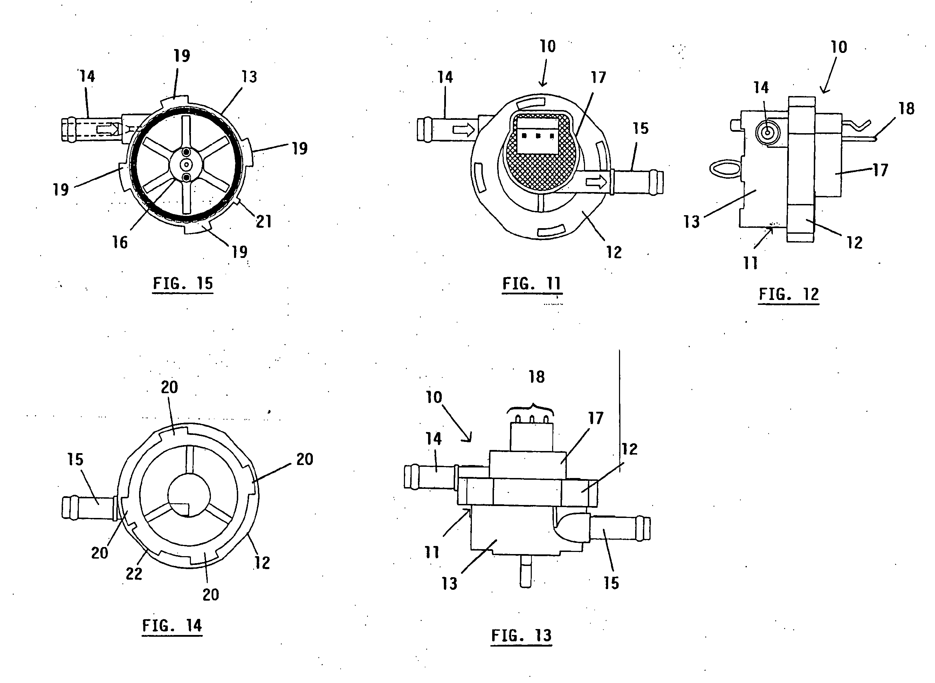

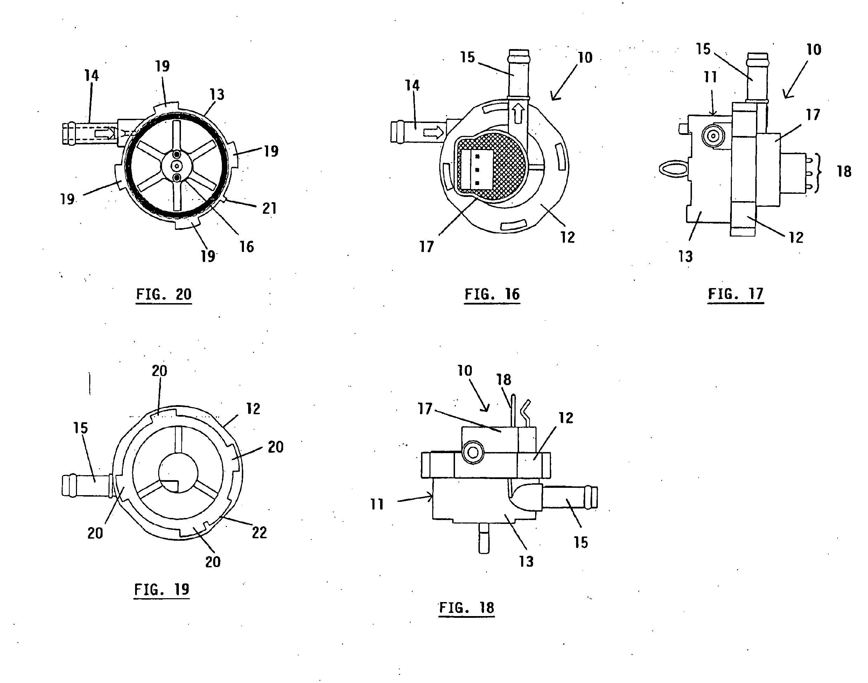

More particularly, considering by way of example the variants of the flow meter according to the invention shown in Figures 6-20 of the drawings, the slot 22 on the upper part 12 of the flow meter can be selectively formed in four positions angularly symmetrically displaced relatively to each other by 90 degrees. Accordingly, as illustrated in Figures 6, 11 and 16 of the drawings, the upper part 12 can be fitted to the lower part 13 so that the outlet connection 15 is placed in four positions angularly symmetrically displaced relatively to each other by 90 degrees.

It is contemplated, of course, that the position of the slot 22 may be kept unchanged, and accordingly the tooth 21 will be formed in different positions angularly symmetrically displaced relatively to each other. This modification, however, does not affect the functions and effects described above.

Further, while a flow meter having four positions of the outlet connection 15 relative to the inlet connection 14 is preferable, it will be apparent to the skilled person, however, that the number of positions of the outlet connection 15 may be three instead, without substantially altering the functionality of the flow meter.

## Claims

1. A flow meter (10) for measuring a liquid flow for an automatic beverage preparing and dispensing apparatus, with a measuring casing (11) comprising an upper part (12) and a lower part (13), and provided with an inlet connection (14) and an outlet connection (15), as well as a measuring body rotatably supported in the casing for determining the liquid flow, the outlet connection (15) being provided on the upper part (12) and the inlet connection (14) being provided on the lower part (13) of the measuring casing, and the upper part (12) and the lower part (13) being detachably interconnectable by a bayonet catch formed of a number of radially outwardly projecting hooks (19) positioned on the periphery of the lower part (13) and a corresponding number of locking receptacles (20) positioned on the upper part (12) of the measuring casing, **characterised in that** the flow meter (10) is provided with a radially outwardly projecting tooth (21) positioned on the periphery of the lower part (13) and with a corresponding slot (22) formed on the upper part (12) for engagement with the tooth (21) whereby the upper part (12) is connectable to the lower part (13) in only one position and orientation of the slot (22) relative to the tooth (21).

2. The flow meter according to claim 1, **characterised in that** the slot (22) on the upper part (12) of the flow meter is selectively formed in a number of positions angularly symmetrically displaced relatively to each other, whereby the upper part (12) is susceptible of being fitted to the lower part (13) with the outlet connection (15) placed in a same number of positions angularly symmetrically displaced relatively to each other.

3. The flow meter according to claim 1, **characterised in that** the tooth (21) on the lower part (13) of the flow meter is selectively formed in a number of positions angularly symmetrically displaced relatively to each other, whereby the upper part (12) is susceptible of being fitted to the lower part (13) with the outlet connection (15) placed in a same number of positions angularly symmetrically displaced relatively to each other.

## Patentansprüche

1. Durchflussmessgerät (10) zum Messen des Durchflusses einer Flüssigkeit für einen Getränkezubereitungs- bzw. -abgabe-Automaten mit einem Messgehäuse (11), bestehend aus einem Oberteil (12) und einem Unterteil (13) und versehen mit einer Einlassverbindung (14) und einer Auslassverbindung (15) sowie mit einem im Messgehäuse drehbar gelagerten Messkörper zur Bestimmung des Durchflusses der Flüssigkeit, wobei die Auslassverbindung (15) im Oberteil (12) und die Einlassverbindung (14) im Unterteil (13) des Messgehäuses vorgesehen sind, und der Oberteil (12) und der Unterteil (13) lösbar untereinander verbindbar sind mittels eines Bajonettverschlusses, der aus einer Anzahl von radial nach außen vorstehenden Haken (19), die auf dem Umfang des Unterteils (13) angeordnet sind, und einer am Oberteil (12) des Messgehäuses angeordneten entsprechenden Anzahl von Rastaufnahmen (20) gebildet ist, **dadurch gekennzeichnet, dass** das Durchflussmessgerät (10) mit einem radial vorstehenden Zahn (21), der auf dem Umfang des Unterteils (13) angeordnet ist, und mit einem im Oberteil (12) gebildeten entsprechenden Schlitz (22) zum Eingriff mit dem Zahn (21) versehen ist, wobei das Oberteil (12) mit dem Unterteil (13) nur in einer Position und in einer Richtung des Schlitzes (22) zum Zahn (21) verbunden werden kann.

2. Durchflussmessgerät nach Anspruch 1, **dadurch gekennzeichnet, dass** der Schlitz (22) im Oberteil (12) des Durchflussmessgeräts mit einer Anzahl von zueinander winkelsymmetrisch versetzten Stellungen selektiv gebildet ist, wobei sich das Oberteil (12) an das Unterteil (13) mit der Auslassverbindung (15) in derselben Anzahl von zueinander winkelsymmetrisch versetzten Stellungen angeordnet, anpassen lässt.

3. Durchflussmessgerät nach Anspruch 1, **dadurch gekennzeichnet, dass** der Zahn (21) im Unterteil (13) des Durchflussmessgerätes selektiv mit einer Anzahl von winkelsymmetrisch zueinander versetzten Stellungen gebildet ist, wobei sich das Oberteil (12) an das Unterteil (13) mit der Auslassverbindung (15) in derselben Anzahl von zueinander winkelsymmetrisch versetzten Stellungen angeordnet, anpassen lässt.

## Revendications

1. Débitmètre (10) pour mesurer un courant de liquide pour un dispositif automatique de préparation et de distribution de boissons, comprenant un boîtier (11) de mesure comprenant une partie (12) supérieure et une partie (13) inférieure et muni d'un raccord (14) d'entrée et d'un raccord (15) de sortie, ainsi que d'un corps de mesure monté tournant dans le boîtier pour déterminer le courant de liquide, le raccord (15) de sortie étant prévu sur la partie (12) supérieure et le raccord (14) d'entrée étant prévu sur la partie (13) inférieure du boîtier de mesure, et la partie (12) supérieure et la partie (13) inférieure pouvant être assemblées de manière détachable par un joint à baïonnette, formé d'un certain nombre de crochets (19) faisant saillie radialement vers l'extérieur et placés sur la périphérie de la partie (13) inférieure et d'un nombre correspondant de réceptacles (20) de verrouillage placés sur la partie (12) supérieure du boîtier de mesure, **caractérisé en ce que** le débitmètre (10) est muni d'une dent (21) faisant saillie radialement vers l'extérieur et placée sur la périphérie de la partie (13) inférieure et d'une fente (22) correspondante formée sur la partie (12) supérieure destinée à coopérer avec la dent (21), la partie (12) supérieure pouvant être assemblée à la partie (13) inférieure dans seulement une position et orientation de la fente (22) par rapport à la dent (21).

2. Débitmètre suivant la revendication 1, **caractérisé en ce que** la fente (22) de la partie (12) supérieure du débitmètre est formée sélectivement en un certain nombre de positions décalées symétriquement du point de vue angulaire les unes par rapport aux autres, la partie (12) supérieure étant susceptible d'être adaptée à la partie (13) inférieure en ayant le raccord (15) extérieur placé dans un même nombre de positions décalées symétriquement du point de vue angulaire les unes par rapport aux autres.

3. Débitmètre suivant la revendication 1, **caractérisé en ce que** la dent (21) sur la partie (13) inférieure du débitmètre est formée sélectivement en un certain nombre de positions décalées symétriquement du point de vue angulaire les unes par rapport aux autres, la partie (12) supérieure étant susceptible d'être adaptée à la partie (13) inférieure en ayant le raccord (15) de sortie placé dans un même nombre de positions décalées symétriquement du point de vue angulaire les unes par rapport aux autres.
